# EUROPÄISCHE PATENTSCHRIFT

(11) **EP 2 018 295 B1**
(45) Veröffentlichungstag und Bekanntmachung des Hinweises auf die Patenterteilung: **28.11.2012**
(21) Anmeldenummer: 07723302.1
(22) Anmeldetag: 16.03.2007
(51) Int. Cl.: B60N 2/68

(54) **STRUKTURELEMENT FÜR FAHRZEUGSITZ**
STRUCTURAL ELEMENT FOR VEHICLE SEAT
ÉLÉMENT DE STRUCTURE POUR SIÈGE DE VÉHICULE

(30) Priorität: 10.05.2006 DE 102006022015; 16.08.2006 DE 102006038244
(43) Veröffentlichungstag der Anmeldung: 28.01.2009
(73) Patentinhaber: Johnson Controls GmbH, 51399 Burscheid (DE)
(72) Erfinder: WEBER, Christoph, 14129 Berlin (DE); FUNK, Stefan, 42799 Leichlingen (DE); KAYA, Hüsseyin, 47804 Krefeld (DE)
(74) Vertreter: Finger, Catrin
(86) Internationale Anmeldenummer: PCT/EP2007/002320
(87) Internationale Veröffentlichungsnummer: WO 2007/128368

(56) Entgegenhaltungen:
- DE-A1- 4 208 150
- DE-A1- 4 402 864
- DE-A1- 19 757 060

## Beschreibung

Die Erfindung betrifft ein Strukturelement für einen Fahrzeugsitz, insbesondere für ein mit einer Durchladeöffnung versehenes Lehnensegment einer Rückenlehne für die Rücksitzbank eines Kraftfahrzeugs, welche eine Blechplatte mit einem aufgesetzten Verstärkungsblech sowie Verstärkungsprofile umfasst.

### Stand der Technik

Ein Strukturelement ist aus der Druckschrift DE 44 02 864 A1 bekannt. Es besteht aus einer ersten, durch Prägen dreidimensional verformten Blechplatte und einem rahmenartig ausgenommenen Verstärkungsblech, welches mit der Blechplatte verbunden ist. In hoch belasteten Bereichen des Strukturelements sind ferner aus Blech geprägte oder gebogene Einlegeteile angeordnet, welche die Festigkeit des Strukturelements lokal erhöhen.

Aus der DE 42 08 150 A1 ist ein gattungsgemäßes Strukturelement für einen Fahrzeugsitz bekannt. Das Strukturelement ist aus zwei aufeinander gesetzten profilierten Halbschalen unter Bildung einer Hohlkammer gebildet. Zur Verstärkung des Strukturelements und Erhöhung dessen Festigkeit sind Rippen vorgesehen.

Die Festigkeitssteigerung durch eine Verstärkung der vorbekannten Art wird den weiterhin steigenden Anforderungen an die Steifigkeit von Fahrzeugsitz-Strukturelementen nicht mehr in allen Fällen gerecht.

### Aufgabe

Der Erfindung liegt die Aufgabe zugrunde, die mechanischen Eigenschaften eines gattungsgemäßen Strukturelements mit einfachen Mitteln zu verbessern.

### Lösung

Die Aufgabe wird erfindungsgemäß dadurch gelöst, dass in das Strukturelement zumindest in Teilbereiche seines Umfangs ein nach außen hin offener, U-förmig ausgebildeter Kanal eingeformt ist, welcher durch ein in den nach außen hin offenen Kanal eingesetztes Verstärkungsprofil in mindestens eine weitere Hohlkammer und mindestens einen nach außen hin offenen, verbleibenden Kanal unterteilt ist.

Die Unteransprüche betreffen bevorzugte Ausführungsformen der Erfindung.

### Figuren

Die Figuren stellen beispielhaft und schematisch eine Ausführung der Erfindung dar.

Es zeigen:
- Fig. 1: eine perspektivische Darstellung einer erfindungsgemäß ausgestatteten Rücksitzbank,
- Fig. 2: einen Schnitt A-A durch ein Strukturelement der Rücksitzbank nach Fig. 1.

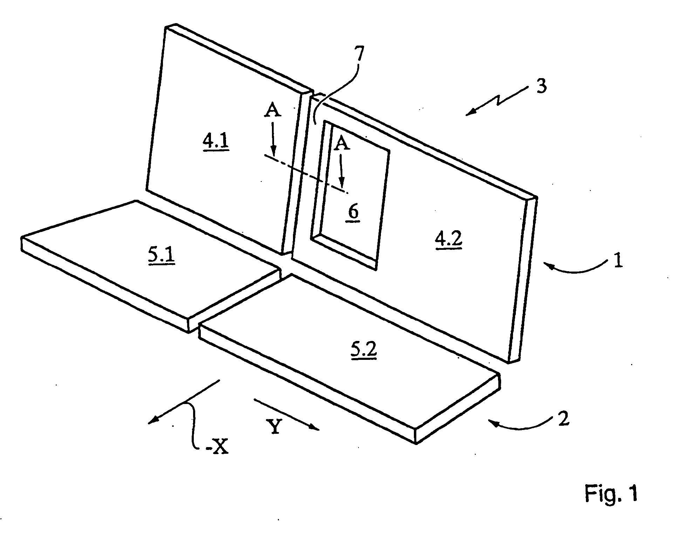

Fig. 1 zeigt schematisch die Strukturelemente von Rückenlehne 1 und Sitzteile 2 einer Rücksitzbank 3, die quer zur Sitzrichtung (Fahrtrichtung -X) im Verhältnis 40:60 in Lehnensegmente 4.1, 4.2 und Sitzteilsegmente 5.1, 5.2 geteilt sind. Durch diese Aufteilung können Teilbereiche der Rücksitzbank 3 von der gezeigten Gebrauchsstellung in eine Ladestellung verlagert werden.

Das 60%-Lehnensegment 4.2 ist ferner mit einer Ausnehmung 6 versehen, die in normalem Gebrauch durch ein Polsterteil und eine Klappe abgedeckt ist, jedoch im Bedarfsfall das Durchladen länglichen Ladeguts ermöglicht. Die Ausnehmung 6 ist, in Querrichtung Y des Fahrzeugs betrachtet, etwa mittig in der Rückenlehne 1 angeordnet, so dass zwischen der Ausnehmung 6 und dem Trennbereich zwischen den Lehnensegmenten 4.1 und 4.2 nur ein relativ schmaler Steg 7 verbleibt. Dieser Bereich wird beim unfallbedingten Auftreffen von Ladegut auf die Rückenlehne 1 naturgemäß mechanisch besonders belastet.

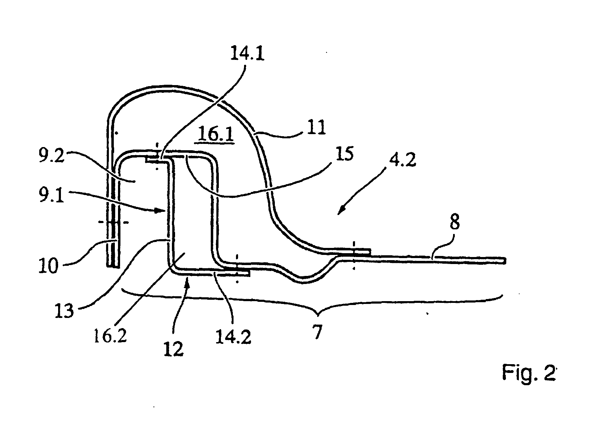

Wie aus Fig. 2 ersichtlich, besteht das dort im Schnitt A-A durch den Steg 7 gezeigte Strukturelement des Lehnensegments 4.2 aus einer geprägten Blechplatte 8, die an ihrem Außenumfang mit einem umlaufenden, U-förmigen Kanal 9.1 versehen ist, welcher zur Rückseite des Lehnensegments 4.2 hin offen ist. In den freien Schenkel 10 dieses Kanals 9.1 werden bei der Fertigung des Sitzes die Befestigungsprofile des Sitzbezuges eingehängt. Der äußere Randbereich des Lehnensegments 4.2 ist ferner mit einem umlaufenden, gleichfalls geprägten Verstärkungsblech 11 versehen, welches den Kanal 9.1 umgreift und mit der Blechplatte 8 unter Ausbildung einer Hohlkammer 16.1 verschweißt ist.

Erfindungsgemäß ist der Kanal 9.1 zumindest im Bereich des Stegs 7, vorzugsweise jedoch vollumfänglich deutlich breiter ausgeführt, als für das Einhängen der Sitzbezugs-Befestigungselemente erforderlich wäre. In den dem freien Schenkel 10 abgewandten Bereich des Kanals 9.1 kann somit ein Z-förmig gebogenes Verstärkungsprofil 12 eingesetzt werden, dessen Basis 13 parallel zum freien Schenkel 10 verläuft und das mit seinen Schenkeln 14.1, 14.2 einerseits im Kanalgrund 15 und anderseits jenseits des Kanals 9.1 mit der Blechplatte 8 unter Ausbildung einer weiteren Hohlkammer 16.2 sowie eines randseitig verbleibenden, U-förmigen Kanals 9.2 verschweißt ist.

Die Erfindung entfaltet im besonders hoch belasteten Steg 7 die größte Wirkung, kann jedoch bei einem teilweise oder sogar ganz um den Außenumfang des Lehnensegments umlaufenden Verstärkungsprofil 12 auch das Lehnensegment 4.2 insgesamt erheblich versteifen. Selbstverständlich können auch das Lehnensegment 4.1 oder das Strukturelement einer ungeteilten Rückenlehne oder auch Strukturelement von Sitzteilen erfindungsgemäß gestaltet werden. Das Verstärkungsprofil 12 kann dabei im Bedarfsfall aus z. B. rollgeformten Profilteilen oder auch aus einem Z-förmig geprägten Blechhalbzeug bestehen.

### Bezugszeichen

- 1: Rückenlehne
- 2: Sitzteil
- 3: Rücksitzbank
- 4.1,4.2: Lehnensegment
- 5.1,5.2: Sitzteilsegment
- 6: Ausnehmung
- 7: Steg
- 8: Blechplatte
- 9.1,9.2: Kanal
- 10: Schenkel (des Kanals 9.1)
- 11: Verstärkungsblech
- 12: Verstärkungsprofil
- 13: Basis
- 14.1, 14.2: Schenkel (des Verstärkungsprofils 12)
- 15: Kanalgrund
- 16.1, 16.2: Hohlkammer

## Patentansprüche

1. Strukturelement für einen Fahrzeugsitz, insbesondere für ein mit einer Durchladeöffnung versehenes Lehnensegment (4.2) einer Rückenlehne (1) für die Rücksitzbank (3) eines Kraftfahrzeugs, welche eine Blechplatte (8) mit einem aufgesetzten Verstärkungsblech (11) sowie Verstärkungsprofile (12) umfasst und eine zwischen Blechplatte (8) und aufgesetztem Verstärkungsblech (11) gebildete Hohlkammer (16.1) aufweist,
**dadurch gekennzeichnet, dass** in das Strukturelement zumindest in Teilbereiche seines Umfangs ein nach außen hin offener, U-förmig ausgebildeter Kanal (9.1) eingeformt ist, welcher durch ein in den nach außen hin offenen Kanal (9.1) eingesetztes Verstärkungsprofil (12) in mindestens eine weitere Hohlkammer (16.2) und mindestens einen nach außen hin offenen, verbleibenden Kanal (9.2) unterteilt ist.

2. Strukturelement nach Anspruch 1, **dadurch gekennzeichnet, dass** der verbleibende Kanal (9.2) gleichfalls U-förmig ausgebildet und/oder im äußersten Randbereich des Strukturelements angeordnet ist.

3. Strukturelement nach Anspruch 1 oder 2, **dadurch gekennzeichnet, dass** das Verstärkungsprofil (12) Z-förmig ausgebildet ist.

4. Strukturelement nach Anspruch 3, **dadurch gekennzeichnet, dass** ein erster Schenkel (14.1) des Verstärkungsprofils (12) im Kanalgrund (15) des Kanals (9.1) und ein zweiter Schenkel (14.2) des Verstärkungsprofils (12) jenseits des Kanals (9.1) mit der Blechplatte (8) und/oder dem Verstärkungsblech (11) verbunden, insbesondere verschweißt ist.

5. Strukturelement nach einem der vorhergehenden Ansprüche, **dadurch gekennzeichnet, dass** der verbleibende Kanal (9.2) zum Einhängen von Sitzbezug-Befestigungselementen vorgesehen ist.

## Claims

1. Structural element for a vehicle seat, especially for a back segment (4.2) provided with an opening for long objects of a seat back (1) for the rear seat bench (3) of a motor vehicle, which comprises a sheet metal plate (8) with a mounted reinforcement sheet (11) as well as reinforcement sections (12) and presents a cavity (16.1) formed between sheet metal plate (8) and mounted reinforcement sheet (11), **characterized in that** a channel (9.1) with a U-shaped design open towards the outside is formed in the structural element at least in partial areas of its circumference, and is subdivided into at least one further cavity (16.2) and at least one remaining channel (9.2) open towards the outside by a reinforcement section (12) inserted into the channel (9.1) open towards the outside.

2. Structural element as claimed in claim 1, **characterized in that** the remaining channel (9.2) also has a U-shaped design and/or is arranged in the outermost edge region of the structural element.

3. Structural element as claimed in any claim 1 or 2, **characterized in that** the reinforcement section (12) has a Z-shaped design.

4. Structural element as claimed in claim 3, **characterized in that** a first leg (14.1) of the reinforcement section (12) in the channel bottom (15) of the channel (9.1) and a second leg (14.2) of the reinforcement section (12) is connected and, in particular, welded to the sheet metal plate (8) and/or reinforcement sheet (11) beyond the channel (9.1).

5. Structural element as claimed in any preceding claim, **characterized in that** the remaining channel (9.2) is provided for hanging-in seat cover fastening elements.

## Revendications

1. Elément structurel pour un siège de véhicule, en particulier pour un segment de dossier (4.2), pourvu d'une ouverture de chargement, d'un dossier (1) pour la banquette arrière (3) d'un véhicule automobile, lequel comprend une plaque de tôle (8) sur laquelle est montée une tôle de renforcement (11), ainsi que des profilés de renforcement (12), et un compartiment (16.1) formé entre la plaque de tôle (8) et la tôle de renforcement (11) montée, **caractérisé en ce qu'**un canal (9.1) prévu en forme de U ouvert vers l'extérieur est ménagé dans l'élément structurel, au moins dans des parties de sa périphérie, lequel est subdivisé par un profilé de renforcement (12) mis en place dans le canal (9.1) ouvert vers l'extérieur en au moins un autre compartiment (16.2) et au moins un canal résiduel (9.2) ouvert vers l'extérieur.

2. Elément structurel selon la revendication 1, **caractérisé en ce que** le canal résiduel (9.2) est également prévu en forme de U et/ou est disposé dans la zone de bord la plus extérieure de l'élément structurel.

3. Elément structurel selon la revendication 1 ou la revendication 2, **caractérisé en ce que** le profilé de renforcement (12) est prévu en forme de Z.

4. Elément structurel selon la revendication 3, **caractérisé en ce qu'**une première aile (14.1) du profilé de renforcement (12) sur le fond (15) du canal (9.1) et une deuxième aile (14.2) du profilé de renforcement (12) de l'autre côté du canal (9.1) sont raccordées, en particulier soudées à la plaque de tôle (8) et/ou à la tôle de renforcement (11).

5. Elément structurel selon l'une des revendications précédentes, **caractérisé en ce que** le canal résiduel (9.2) est prévu pour l'accrochage d'éléments de fixation de revêtement de siège.
